# EUROPEAN PATENT APPLICATION

(11) **EP 3 739 861 A1**
(43) Date of publication of application: **18.11.2020**
(21) Application number: 20165879.6
(22) Date of filing: 26.03.2020
(51) Int. Cl.: H04N 1/00, H04N 1/32

(54) **IMAGE MANAGEMENT METHOD AND APPARATUS, AND STORAGE MEDIUM**

(30) Priority: 16.05.2019 CN 201910408608
(71) Applicant: Beijing Xiaomi Mobile Software Co., Ltd., Beijing 100085 (CN)
(72) Inventor: NIE, Jiefeng, Beijing, 100085 (CN); ZHOU, Ruixiao, Beijing, 100085 (CN); LV, Yanliang, Beijing, 100085 (CN); HUANG, Jia, Beijing, 100085 (CN); MOU, Haidong, Beijing, 100085 (CN)
(74) Representative: Kudlek, Franz Thomas

(57) **Abstract**

The present disclosure provides an image management method and apparatus, and a storage medium. The method includes: receiving (S102) a download request of a first client device for a first image, and verifying whether the first client device has a download authorization of the first image; in response to the first client device having the download authorization, adding (S 104) an encryption mark to the first image by using identity information of the first client device to obtain a second image; generating (S106) a download identification code for uniquely identifying the second image, and storing the download identification code; and transmitting (S108) the second image to the first client device.

## Description

### FIELD

The present disclosure relates to computer technologies, and particularly, to an image management method and apparatus, and a storage medium.

### BACKGROUND

With a continuous development of internet technology, a large amount of image resources have problems of being copied, modified, spread and used, so that an effective management and protection of a copyright of the image resources draw more and more attention.

In a conventional image management method, in order to protect the copyright of an image, identification information of an image owner is generally added to the image in an incomplete transparent watermark manner, and then the image with the identification information of the image owner is spread and used.

However, the identification information of the image owner still has a risk of being maliciously erased currently, and if the identification information of the image owner is removed by tampering, covering or cutting and then is spread and used, rights and interests of the image owner are difficult to guarantee, and a responsibility of stealing the image is difficult to trace.

### SUMMARY

The present disclosure provides an image management method and apparatus, and a storage medium. A technical solution provided by embodiments of the present disclosure may protect the image copyright and solve the problem that the responsibility of stealing the image is difficult to trace to a certain extent.

In a first aspect of the invention, an image management method is provided. The method includes: receiving a download request of a first client device for a first image, and verifying whether the first client device has a download authorization of the first image; in response to the first client device having the download authorization, adding an encryption mark to the first image by using identity information of the first client device to obtain a second image; generating a download identification code for uniquely identifying the second image, and storing the download identification code; and transmitting the second image to the first client device.

In an embodiment, adding the encryption mark to the first image by using the identity information of the first client device to obtain the second image may include: adding the identity information of the first client device into an exchangeable image file format (EXIF) of the first image to obtain the second image.

In an embodiment, adding the encryption mark to the first image by using the identity information of the first client device to obtain the second image may include: generating an encrypted dot-matrix watermark according to the identity information of the first client device; and adding the encrypted dot-matrix watermark into the first image to obtain the second image, wherein the encrypted dot-matrix watermark is displayed in a fully transparent manner.

In an embodiment, the identity information of the first client device may include: identification information for uniquely identifying an identity of the first client device; and transaction information of the first client device for the first image, in which the transaction information includes: a transaction identification code.

In an embodiment, the identity information of the first client device may include: identification information for uniquely identifying an identity of the first client device; and transaction information of the first client device for the first image, in which the transaction information includes: a transaction identification code.

In an embodiment, the identity information of the first client device may include: identification information for uniquely identifying an identity of the first client device; and transaction information of the first client device for the first image, in which the transaction information includes: a transaction identification code.

In an embodiment, the method also includes: receiving an image publishing request transmitted by a second client device, in which the image publishing request carries the first image; generating an image identification code for uniquely identifying the first image; and storing the image identification code.

In a second aspect of the present invention, an image management apparatus is provided. The apparatus includes: a receiving module, configured to receive a download request of a first client device for a first image, and verify whether the first client device has a download authorization of the first image; an encryption module, configured to, in response to the first client device having the download authorization, add an encryption mark to the first image by using identity information of the first client device to obtain a second image; a generation module, configured to generate a download identification code for uniquely identifying the second image; a storage module, configured to store the download identification code; and a transmitting module, configured to transmit the second image to the first client device.

In a third aspect of the present invention, a computer readable storage medium is provided to store the computer program. When the computer program is executed, the processor performs the image management method according to the first aspect of the present disclosure.

When receiving the image download request of the first client, it is firstly verified whether the first client has the download qualification of the image, if so, subsequent operations are executed, otherwise, the image for the first client is refused to provide; therefore, if the first client has the download qualification, the encryption mark is added to the first image by using the identity information of the first client, and the image added with the encrypted mark is provided for the first client, so that if the image is illegally stolen subsequently, an outflow source of the image may be determined by the encrypted mark carried in the image, and a subsequent responsibility tracing is facilitated; in addition, an unique downloading identification code is generated for the image added with the encrypted mark according to embodiments of the present disclosure, and the downloading identification code is stored, so that downloading information is recorded, and the subsequent responsibility tracing is ensured. Therefore, a technical solution provided by embodiments of the present disclosure may protect the image copyright and solve the problem that the responsibility of stealing the image is difficult to trace to a certain extent.

### BRIEF DESCRIPTION OF THE DRAWINGS

The accompanying drawings are incorporated in and constitute a part of the specification, illustrate embodiments of the present disclosure and together with the description, serve to explain principles of the present disclosure.
FIG. 1 is a schematic flow chart of an image management method according to an example of the present disclosure;
FIG. 2 is a schematic view of a scene architecture of an image management method according to an example of the present disclosure;
FIG. 3 is a flow chart illustrating an image management method according to another example of the present disclosure;
FIG. 4 is a block diagram of an image management apparatus according to an example of the present disclosure; and
FIG. 5 is a schematic physical structure diagram of an image management apparatus according to an example of the present disclosure.

With the above figures, there are shown certain embodiments of the present disclosure and will be described in more detail hereinafter. The drawings and the description are not intended to limit the scope of the concepts of the present disclosure in any manner, but rather to illustrate the concepts of the present disclosure to those skilled in the art by reference to specific embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

A specific application scene of the present disclosure is a scene of image copyright protection, and is mainly provided aiming at a problem that the image in the related art is easy to copy, modify, spread and use.

In order to solve above technical problems in the related art, an image management method provided by the present disclosure proposes following solutions: when a client device requests to download a certain image, whether the client device has a download authorization of the image is verified firstly, if so, an encryption mark is added to the image by using identity information of the client device, and therefore the image added with the encrypted mark is transmitted to the client device, and unique identification information of the image added with the encrypted mark is generated and recorded in a block chain account book.

The following describes the technical solution of the present disclosure and how to solve the above technical problems with specific embodiments. These several specific embodiments may be combined with each other below, and details of same or similar concepts or processes may not be elaborated in some embodiments. Embodiments of the present disclosure will be described below with reference to the accompanying drawings.

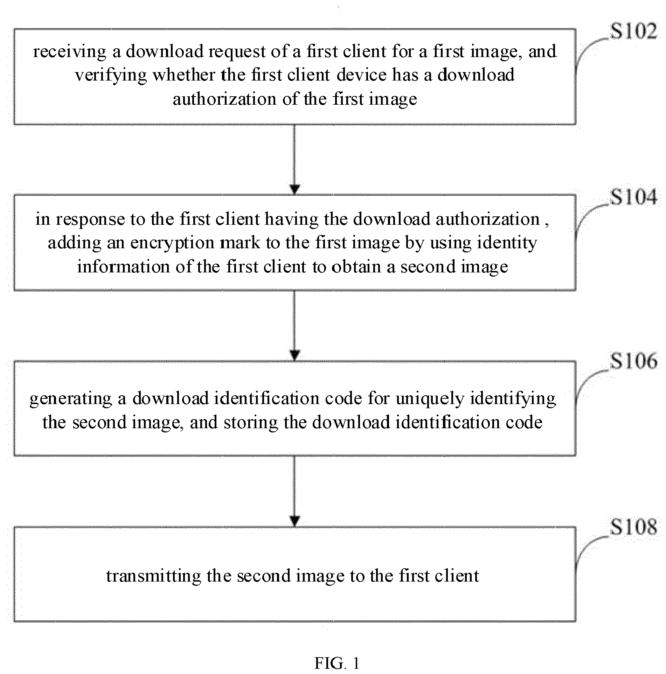

The present disclosure provides an image management method. Referring to FIG. 1, the method includes followings.
At S102, a download request of a first client device for a first image is received, and whether the first client device has a download authorization of the first image is verified;
At S104, in response to the first client device having the download authorization, an encryption mark is added to the first image by using identity information of the first client device to obtain a second image;
At S106, a download identification code is generated for uniquely identifying the second image, and the download identification code is stored; and
At S108, the second image is transmitted to the first client device.

Hereinafter, the image management method according to the example of the present disclosure will be specifically described with reference to the above steps.

The identity information of any client device involved in the embodiments of the present disclosure may include, but is not limited to: the identification information for uniquely identifying the client device. For example, it may be embodied as: an identity identification code.

In addition, for a client device requesting to download the certain image, such as the first client device, at this time, the identity information of the client device may further include: transaction information of the client device for the requested downloaded image. The transaction information may include, but is not limited to: a transaction identification code. One piece of transaction information may be uniquely indicated by the transaction identification code.

In addition, the transaction information may further include at least one of the following information: an image identification code of the image traded, the identification information of an image owner, the identification information of an image purchaser, an authorization type and an authorization period of the image acquired by the image purchaser.

The authorization type may include but is not limited to: a personal authorization or a commercial authorization. The personal authorization refers to the image purchaser uses the image in a personal use range and cannot use the image for business; and the commercial authorization refers to the image is available for a commercial use, e.g., a commercial advertisement.

The authorization period may include: a permanent authorization or a specified-period authorization. The permanent authorization refers to the image purchaser is authorized to use the image permanently. The specified-period authorization indicates that the image purchaser has authorization to use the image within a specified period. The image purchaser does not have the authorization to use the image outside of the specified period. The specified period may be defined by the image owner, or may be defined by an execution apparatus of the image management method, or may be determined by a negotiation between the image owner and the image purchaser, which is not particularly limited in the embodiments of the present disclosure.

In an example implementation scene, the identity information of the first client device includes: the identity identification code and the transaction identification code for uniquely identifying the identity of the client device. Other transaction information may be stored in other locations, such as a block chain account book, or in a local storage, or in a cloud storage, etc.

In one or more embodiments of the present disclosure, for convenience of description, implementation of the above steps is described by taking the owner of the first image as the second client device and the purchaser of the first image as the first client device as an example.

When the first client device requests to download the first image, whether the first client device has the download authorization of the first image is verified. The implementation may include but is not limited to the following manners.

In a first manner, the identity identification code of the first client device is acquired, whether the identity identification code is an authorized identification code of the first image, and if so, the first client device has the download authorization of the first image is determined; otherwise, if not, the first client device does not have the download authorization of the first image is determined.

In a second manner, the identity identification code of the first client device is acquired, whether the identity identification code is an authorized identification code of the first image, and if so, whether the authorization period corresponding to the identity identification code is expired is verified, and if not, the first client device has the download authorization of the first image is determined; otherwise, if it is expired, the first client device does to have the download authorization of the first image is determined. If the identity identification code is not the authorized identification code of the first image, the first client device does not have the download authorization of the first image is determined.

In a third manner, the transaction information acquisition request is transmitted to the first client device, the transaction information for the first image transmitted by the first client device is received, the payment state of the first client device for the first image is carried in the transaction information, and if the payment state is paid, the first client device has the download authorization of the first image is determined; otherwise, if the payment state is unpaid, the first client device does not have the download authorization of the first image is determined.

In addition, a verification process related to S102 may be further implemented in combination with a block chain technique. For example, in the first and second implementations, all information of the first image may be acquired from the block chain account book, and the information relates to an entering chain of the first image, any transaction information of the first image, the identification information of the first image, and a creator of the first image (the identification information of the second client device). For another example, in the third implementation, all transaction information related to the first image is recorded in the block chain, so that all the transaction information related to the first image may be acquired in the block chain, and if the transaction information of the first client device for the first image is not included therein, it may be determined that the first client device does not have the download authorization; otherwise, if all the transaction information of the first image includes the transaction information of the first client device for the first image, it may be determined that the first client device has the download authorization.

In addition, in another implementation scene, step S102 may also be implemented in combination with a cloud storage technology. The cloud storage server can be responsible for recording all client device identity information, transaction information and image information, so that data and information can be requested from the cloud storage server and judged according to the three implementations.

In another implementation scene, step S102 may be further implemented by combining a block chain technology and a cloud storage technology. At this time, the cloud storage server may be responsible for recording all the identity information, the transaction information, and the image information of the client device, and the block chain account book may only record: the image identification code and the transaction identification code. Thus, the information in the three implementations may be realized by interacting with the block chain and the cloud storage server.

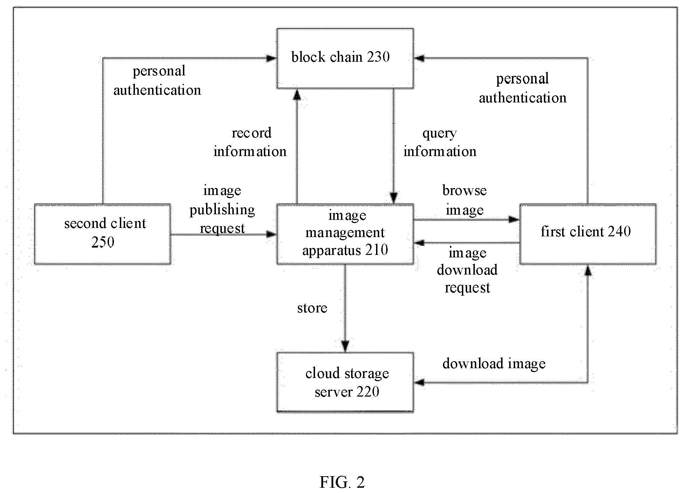

Taking the aforementioned third manner as an example, please refer to FIG. 2, the implementation scene shown in FIG. 2 includes: an image management apparatus 210, a cloud storage server 220, a block chain 230, a first client device 240 and a second client device 250, the image management apparatus 210 may record information to the block chain 230, and may also query information to the block chain 230, and in addition, the image management apparatus 210 may also store data in the cloud storage server 220. In this implementation scene, when step S102 is implemented, an executing apparatus 210 of the image management method may transmit the transaction information acquisition request to the first client device 240, and receive the transaction identification code for the first image transmitted by the first client device 240, so as to interact with the block chain 230, and if the transaction identification code is one of all transaction identification codes recorded in the block chain account book, it is determined that the first client device 240 has a transaction situation for the first image, and may have the download authorization. At this time, specific transaction information corresponding to the transaction identification code may be requested from the cloud storage server 230 according to the transaction identification code, and then according to the specific transaction information, whether the payment of the first client device 240 is completed may be further determined, and the authorization type and the authorization period of a permission of the transaction may be further determined, so that whether the first client device 240 has the download authorization of the first image is verified. The second client device 250 may not process at this step. In addition, as shown in FIG. 2, the first client device 240 and the second client device 250 may be nodes on the block chain 230, and at this time, the client device needs to perform personal authentication to the block chain 230. In one or more embodiments of the present disclosure, a number of the first client device 240 and the second client device 250 is not particularly limited.

After the verification in S102, if a verification result is positive, that is, the first client device has the download authorization of the first image, a step of adding the encryption mark to the first image and obtaining the second image in S104 is executed; otherwise, if the verification result is negative, the first client device does not have the download authorization of the first image, the process may be directly ended without performing other processing, or prompt information may be fed back to the first client device, the prompt information may be configured to prompt the first client device to obtain the download authorization of the first image.

In some embodiments of the present disclosure, a condition that the first image is stolen or abused by a client device without the download authorization may be avoided to a certain extent aiming at the verification that whether the first client device has the download authorization of the first image, and a value of the first image and rights and interests of the owner of the first image are ensured.

Further, in order to make a source of the first image be traced, in one or more embodiments of the present disclosure, for the image download request of the first client device, the encryption mark is added to the first image to obtain the second image, and at this time, the second image is provided for the first client device instead of the first image. Therefore, any image may be downloaded with the identity information of the client device requesting to download the image, and therefore if the image is found to be stolen, the encryption mark carried in the stolen image may be obtained, the identity information of the source client device of the image may be determined through the encryption mark, a traceability of the source of the image is achieved, and an image copyright of the image owner is protected.

Specifically, the example of the present disclosure provides following two feasible implementations for executing the step S104.

A first implementation is as follows. The identity information of the first client device is added into an Exchangeable Image File (EXIF) of the first image to obtain the second image.

Specifically, the EXIF is generally configured to record attribute information and photographing data of an image, and for example, the EXIF may include: at least one of a photographer, a photographing time, a photographing position, a photographing device, and a photographing parameter.

Therefore, in one or more embodiments of the present disclosure, if it is determined that the first client device has the download authorization, the identity information of the first client device, which is preferably an identity code for uniquely identifying the identity of the first client device, is written into the EXIF.

The manner of writing in the EXIF may be the described as follows. Information in part of fields in the EXIF is replaced with the identity information of the first client device; alternatively, the identity information of the first client device is written into a blank field in the EXIF; alternatively, a new field is added in the EXIF and the identity information of the first client device is written in.

The first implementation has advantages that a processing amount of marked data is small, the first implementation may be implemented only by writing the information in the EXIF originally existing in the first image, which is simple, convenient and flexible, and has a high expansibility.

Specifically, in a feasible implementation scene, in order to further ensure a security of the identity information written into the EXIF, the identity information of the first client device may be encrypted, and the encrypted identity information is written into the EXIF.

One encryption method may be the followings. The identity information of the first client device is encrypted by using a digital signature of the client device, and a hash value obtained after the encryption is written into the EXIF. The implementation is combined with a block chain technology, and the digital signature is private to each node on the block chain, so that the execution apparatus of the image management method is used as a node on the block chain, the digital signature is unique, the digital signature is used for encrypting the identity information of the first client device, and the security of the encrypted identifier added in the first image is further ensured.

The second implementation is described as follows. An encrypted dot-matrix watermark is generated according to the identity information of the first client device.

The encrypted dot-matrix watermark is added into the first image to obtain the second image, the encrypted dot-matrix watermark is displayed in a full-transparent manner.

In this implementation, the encrypted dot-matrix watermark is displayed in a fully transparent manner, that is, the second image is not different from the first image in a use of display, so that the display influence on the first image is reduced as much as possible. Further, in a specific implementation, in order to further reduce an influence on the image display as much as possible, the encrypted dot-matrix watermark may be added to an unimportant position, such as a blank position, in the first image; as another example, the image may show a region of a large area, such as a location of the sky in the image.

In this implementation, because the encrypted dot-matrix watermark in the second image is displayed in the fully transparent manner, if a user steals or modifies the image, the user may not notice the encrypted dot-matrix watermark displayed in the fully transparent manner in the image.

In addition, besides the two implementations, when the solution is specifically implemented, the first image may be encrypted and marked by adopting a combination manner of the two implementations to obtain the second image.

The second image is then transmitted to the first client device. At this time, processing modes may be included but not limited the followings.

The second image is directly transmitted to the first client device. The mode is simple and quick in an implementation process.

Alternatively, as shown in FIG. 2, the second image is stored in the cloud storage server 220, a download link of the second image in the cloud storage server 220 is generated, and the download link is transmitted to the first client device 240, so that the first client device 240 downloads the second image from the cloud storage server 220. In the implementation, the second image is stored in the cloud storage server, a direct interaction of the second image is not needed, a data volume transmitted to the first client device is small, and an efficiency and a security of a downloading service are improved.

In addition, the present disclosure also generates a download identification code according to the second image, and the download identification code may uniquely identify the second image.

In a feasible implementation scene, the download identification code may be randomly generated according to a preset code generation strategy or directly generated according to a preset code rule, the generated code only indicates the second image, that is, the generated code is different from the image identification codes of other images and is also different from the download identification codes of other downloaded images. In this implementation, the download identification code is independent of characteristics of the second image and the identity information of the first client device.

In another possible implementation scene, a feature extraction may be performed on the second image, and then the download identification code is generated according to the extracted feature and the identity information of the first client device. In this implementation, the download identification code is directly obtained from the second image.

After the download identification code of the second image is generated, the download identification code is stored, that is, a download record of the first image is stored, so that when problems such as an image embezzlement and the like occur subsequently, the source may be traced according to the download record. In addition, this may also avoid a repeated generation of the second image when a subsequent request of the data by the first client device again.

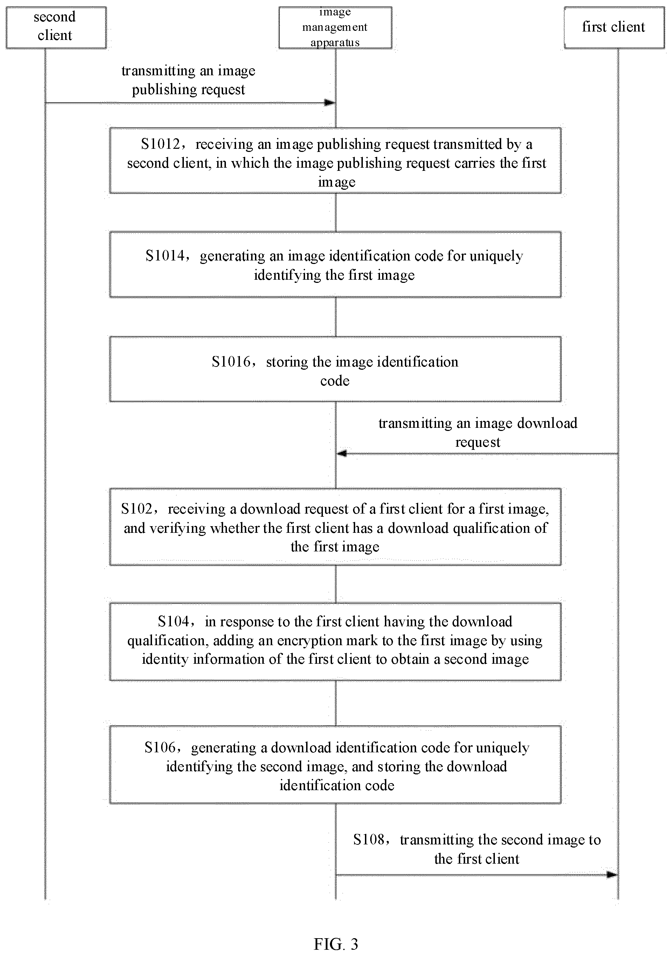

In one or more embodiments of the present disclosure, in addition to the management method for the first client device, the present disclosure further provides a management method for the owner (the second client device) of the first image requesting to put the first image in storage, at this time, reference may be made to an interaction flow chart shown in FIG. 3, the method executed by the image management apparatus further includes the following steps.

At S1012, an image publishing request transmitted by the second client device is received, the image publishing request carries the first image.

At S 1014, the image identification code for uniquely identifying the first image is generated.

At S1016, the image identification code is stored.

The implementation of generating the identification code of the second image is similar to the implementation of generating the download identification code of the second image. The identification code of the second image may be generated randomly or regularly according to a preset algorithm, or may be generated according to an image feature of the first image.

In an example implementation scene, such as the scene shown in FIG. 2, the image identification code and the aforementioned download identification code may be stored in the block chain account book. That is, after the first image is received, the information about the first image is recorded in the block chain account book by means of the identification code, and by utilizing characteristics that the block chain is not modifiable and deletable, the security of the record of the image copyright is further improved, and the traceability of the image is ensured.

In addition, the image management method according to one or more embodiments of the present disclosure may further provide a possibility of trading the image for the first client device and the second client device. Before this step is performed, as shown in FIG. 2, the first client device may view a video in the image management apparatus, and the image management apparatus may also recommend the image for the first client device according to a feature of the first client device.

The first client device may select the image needing to be traded according to an requirement of the first client device. Therefore, the first client device may initiate a transaction request to the second client device through the image management apparatus, and if the transaction is successful, the image management apparatus may record the transaction information on the block chain and/or the cloud storage server.

In addition, the present disclosure has no limitation on the number of transaction and a transaction mode between the first client device and the second client device. For example, the two may complete the transaction through a virtual currency, the virtual currency may be exchanged by cash and/or may be issued according to a reward of a user behavior, which is not particularly limited by the embodiments of the present disclosure. In addition, a dispensing amount of the virtual currency may be further controlled, for example, a total amount of the virtual currency may be controlled to be 1 hundred million; and, a usage rule of the virtual currency may also be restricted, for example, the virtual currency is not allowed to be cash out, etc. A control rule of the virtual currency may need to be set.

When the image management apparatus recommends the image for the first client device, the image management apparatus may further classify the image managed by the image management apparatus, for example, classify the image according to at least one of location information, scene information, and an image type, and then process the image in at least one of Artificial Intelligence (AI), a big data analysis, and a cloud computing, so as to recommend the image more suitable for a user requirement for the first client device, thereby improving a success rate of the transaction.

In addition, the client device according to one or more embodiments of the present disclosure may be a terminal device held by the user, and the user communicates with the image management apparatus through the client device. The terminal device may include a wireless terminal or a wired terminal. A wireless terminal may refer to a device providing voice and/or other traffic data connectivity to the user, a handheld device having a wireless connectivity capability, or other processing device connected to a wireless modem. The wireless terminal, which may be a mobile terminal such as a mobile telephone (or "cellular" telephone) and a computer having the mobile terminal, e.g., a portable, pocket, hand-held, computer-included, or vehicle-mounted mobile apparatus, may communicate with one or more core Network devices via a Radio Access Network (RAN), and may exchange language and/or data with the RAN. For another example, the Wireless terminal may also be a Personal Communication Service (PCS) phone, a cordless phone, a Session Initiation Protocol (SIP) phone, a Wireless Local Loop (WLL) station, a Personal Digital Assistant (PDA), and other devices. The wireless Terminal may also be referred to as a system, a Subscriber Unit (Subscriber Unit), a Subscriber Station (Subscriber Station), a Mobile Station (Mobile), a Remote Station (Remote Station), a Remote Terminal (Remote Terminal), an Access Terminal (Access Terminal), a client device (client device), a User Agent (User Agent), and a client device (User Device or client device), which are not limited herein. Optionally, the terminal device may also be a smart watch, a tablet computer, or the like.

The technical solution provided by embodiments of the present disclosure at least has the following technical effects. When receiving the image download request from the first client device, it is firstly verified whether the first client device has the download authorization of the image, if so, subsequent operations are executed, otherwise, the download request is refused and the image will not be provided. Therefore, if the first client device has the download authorization, the encryption mark is added to the first image by using the identity information of the first client device, and the image added with the encrypted mark is provided for the first client device, so that if the image is illegally stolen subsequently, an outflow source of the image may be determined by the encrypted mark carried in the image, and a subsequent responsibility tracing is facilitated. In addition, an unique downloading identification code is generated for the image added with the encrypted mark according to embodiments of the present disclosure, and the downloading identification code is stored, so that downloading information is recorded, and the subsequent responsibility tracing is ensured. Therefore, a technical solution provided by embodiments of the present disclosure may protect the image copyright and solve the problem that the responsibility of stealing the image is difficult to trace to a certain extent.

The present disclosure further provides an apparatus embodiment for implementing each step and method in the method embodiment.

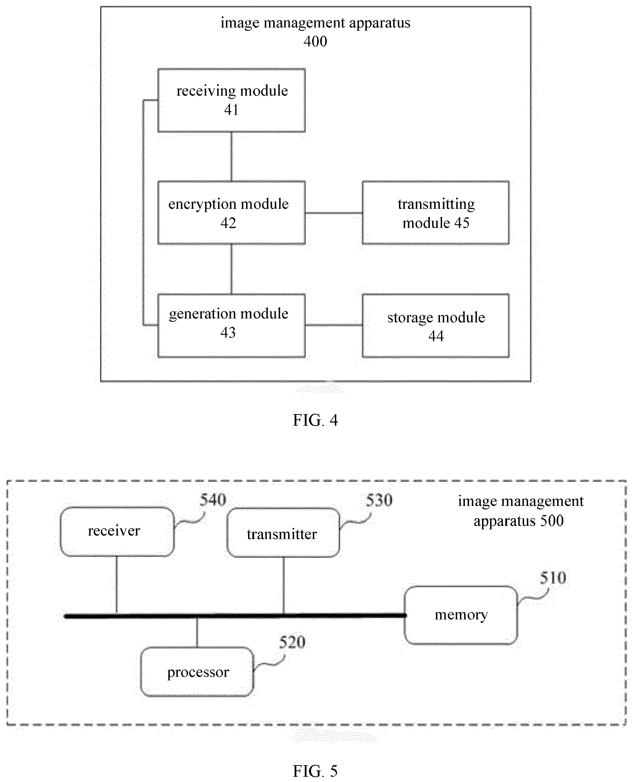

Referring to FIG. 4, an image management apparatus 400 according to an example of the present disclosure includes a receiving module 41, an encryption module 42, a generation module 43, a storage module 44 and a transmitting module 45.

The receiving module 41 is configured to receive the download request of the first client device for the first image, and verify whether the first client device has the download authorization of the first image.

The encryption module 42 is configured to, in response to the first client device having the download authorization, add the encryption mark to the first image by using identity information of the first client device to obtain the second image.

The generation module 43 is configured to generate the download identification code for uniquely identifying the second image.

The storage module 44 is configured to store the download identification code.

The transmitting module 45 is configured to transmit the second image to the first client device.

In a possible implementation scene, the encryption module 42 is specifically configured to:
add the identity information of the first client device into an exchangeable image file format EXIF of the first image to obtain the second image.

In another possible implementation scene, the encryption module 42 is specifically configured to:
generate an encrypted dot matrix watermark according to the identity information of the first client device; and
add the encrypted dot matrix watermark into the first image to obtain the second image, the encrypted dot matrix watermark is displayed in the fully transparent manner.

In some embodiments of the present disclosure, the identity information of the first client device includes:
identification information for uniquely identifying an identity of the first client device; and

The transaction information of the first client device for the first image, the transaction information includes a transaction identification code.

In a feasible implementation scene, the receiving module 41 is further configured to receive the image publishing request transmitted by the second client device, the image publishing request carries the first image.

The generation module 43 is further configured to generate the image identification code for uniquely identifying the first image.

The storage module 44 is further configured to store the image identification code.

Also, embodiments of the present disclosure provide the image management apparatus, referring to FIG. 5, the image management apparatus 500 includes:
a memory 510;
a processor 520; and
a computer program;
the computer program is stored in the memory 510 and configured to be executed by the processor 520 to implement the method as described in the above embodiments.

In addition, as shown in FIG. 5, a transmitter 530 and a receiver 540 are further disposed in the image management apparatus 500 for data transmission or communication with other devices, which are not elaborated here.

In embodiments of the present disclosure, the memory 510 may be implemented by any type of volatile or non-volatile memory device or combination thereof, such as a Static Random Access Memory (SRAM), an Electrically Erasable Programmable Read Only Memory (EEPROM), an Erasable Programmable Read Only Memory (EPROM), a Programmable Read-Only Memory (PROM), a Read-Only Memory (ROM), a magnetic Memory, a flash Memory, a magnetic disk or an optical disk.

Furthermore, embodiments of the present disclosure provide a computer-readable storage medium, a computer program is stored thereon, the computer program is executed by the processor to implement the method in the disclosure.

For example, the computer readable storage medium may be a ROM, a Random Access Memory (RAM), a Compact disk-Read-Only Memory (CD-ROM), a magnetic tape, a floppy disk, an optical data storage device, and the like.

Since each module in this embodiment may execute the disclosed method in, reference may be made to the related description of Embodiment 1 for parts of this embodiment which is not described in detail.

The technical solution provided by embodiments of the present disclosure at least has the following technical effects. When receiving the image download request of the first client device, it is firstly verified whether the first client device has the download authorization of the image, if so, the subsequent operations are executed, otherwise, the download request is refused the image is not provided. Therefore, if the first client device has the download authorization, the encryption mark is added to the first image by using the identity information of the first client device, and the image added with the encrypted mark is provided for the first client device, so that if the image is illegally stolen subsequently, the outflow source of the image may be determined by the encrypted mark carried in the image, and the subsequent responsibility tracing is facilitated. In addition, the unique downloading identification code is generated for the image added with the encrypted mark according to embodiments of the present disclosure, and the downloading identification code is stored, so that downloading information is recorded, and the subsequent responsibility tracing is ensured. Therefore, the technical solution provided by embodiments of the present disclosure may protect the image copyright and solve the problem that the responsibility of stealing the image is difficult to trace to a certain extent.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art. It is intended that the specification and examples be considered as exemplary only, with a scope of the present disclosure being indicated by the following claims.

## Claims

1. An image management method, comprising:
receiving (S102) a download request of a first client device for a first image, and verifying whether the first client device has a download authorization of the first image;
in response to the first client device having the download authorization, adding (S104) an encryption mark to the first image by using identity information of the first client device to obtain a second image;
generating (S106) a download identification code for uniquely identifying the second image, and storing the download identification code; and
transmitting (S108) the second image to the first client device.

2. The method of claim 1, wherein adding (S104) the encryption mark to the first image by using the identity information of the first client device to obtain the second image comprises:
adding the identity information of the first client device into an exchangeable image file format (EXIF) of the first image to obtain the second image.

3. The method of claim 1 or 2, wherein adding (S104) the encryption mark to the first image by using the identity information of the first client device to obtain the second image comprises:
generating an encrypted dot-matrix watermark according to the identity information of the first client device; and
adding the encrypted dot-matrix watermark into the first image to obtain the second image, wherein the encrypted dot-matrix watermark is displayed in a fully transparent manner.

4. The method of any of claims 1 to 3, wherein the identity information of the first client device comprises:
identification information for uniquely identifying an identity of the first client device; and
transaction information of the first client device for the first image, wherein the transaction information comprises: a transaction identification code.

5. The method of any one of the preceding claims, wherein the identity information of the first client device comprises:
identification information for uniquely identifying an identity of the first client device; and
transaction information of the first client device for the first image, wherein the transaction information comprises: a transaction identification code.

6. The method of any one of the preceding claims, wherein the identity information of the first client device comprises:
identification information for uniquely identifying an identity of the first client device; and
transaction information of the first client device for the first image, wherein the transaction information comprises: a transaction identification code.

7. The method of any one of the preceding claims, further comprising:
receiving (S1012) an image publishing request transmitted by a second client device, wherein the image publishing request carries the first image;
generating (S1014) an image identification code for uniquely identifying the first image; and
storing (S1016) the image identification code.

8. An image management apparatus (400), comprising:
a receiving module (41), configured to receive a download request of a first client device for a first image, and verify whether the first client device has a download authorization of the first image;
an encryption module (42), configured to, in response to the first client device having the download authorization, add an encryption mark to the first image by using identity information of the first client device to obtain a second image;
a generation module (43), configured to generate a download identification code for uniquely identifying the second image;
a storage module (44), configured to store the download identification code; and
a transmitting module (45), configured to transmit the second image to the first client device.

9. The apparatus of claim 8, wherein the encryption module (42) is configured to:
add the identity information of the first client device into an exchangeable image file format (EXIF) of the first image to obtain the second image.

10. The apparatus of claim 8 or 9, wherein the encryption module (42) is configured to:
generate an encrypted dot-matrix watermark according to the identity information of the first client device; and
add the encrypted dot-matrix watermark into the first image to obtain the second image, wherein the encrypted dot-matrix watermark is displayed in a fully transparent manner.

11. The apparatus according to any of claims 8 to 10, wherein the identity information of the first client device comprises:
identification information for uniquely identifying an identity of the first client device; and
transaction information of the first client device for the first image, wherein the transaction information comprises: a transaction identification code.

12. The apparatus according to any one of claims 8 to 11, wherein the identity information of the first client device comprises:
identification information for uniquely identifying an identity of the first client device; and
transaction information of the first client device for the first image, wherein the transaction information comprises: a transaction identification code.

13. The apparatus according to any one of claims 8 to 12, wherein the identity information of the first client device comprises:
identification information for uniquely identifying an identity of the first client device; and
transaction information of the first client device for the first image, wherein the transaction information comprises: a transaction identification code.

14. The apparatus of any one of claims 8 to 13, wherein:
the receiving module (41) is configured to receive an image publishing request transmitted by a second client device, wherein the image publishing request carries the first image;
the generation module (43) is configured to generate an image identification code for uniquely identifying the first image; and
the storage module (44) is configured to store the image identification code.

15. A non-transitory computer-readable storage medium, having a computer program stored thereon, wherein
the computer program is executed by one or more processors to perform the image management method of any of claims 1-7.
